(19) Europäisches Patentamt

European Patent Office

Office européen des brevets

(11) Publication number: **0 493 971 A1**

## (12) EUROPEAN PATENT APPLICATION

(21) Application number: **91312064.8**

(22) Date of filing: **27.12.91**

(51) Int. Cl.⁵: **B05D 1/10**, C09D 123/20

(30) Priority: **31.12.90 US 636060**

(43) Date of publication of application:
**08.07.92 Bulletin 92/28**

(84) Designated Contracting States:
**BE DE FR GB IT NL**

(71) Applicant: **SHELL OIL COMPANY**
**900, Louisiana Street**
**Houston Texas 77002(US)**

(72) Inventor: **Castro, Cesar Orlando**
**13101 Briar Forest, Nr. 6706**
**Houston, Texas 77077(US)**

(74) Representative: **Myerscough, Philip Boyd**
**J.A. Kemp & Co. 14 South Square, Gray's Inn**
**London WC1R 5LX(GB)**

(54) **Process for coating a substrate.**

(57) A coated substrate is produced by melting a powdered polymeric material which comprises a blend containing polybutylene, an adhesion promoter and a nucleating agent and spraying the molten polymeric material onto the substrate.

EP 0 493 971 A1

This invention relates to a process for coating a substrate with a polymeric material comprising a blend of a butylene polymer, an adhesion promoter and a nucleating agent.

Butylene polymers, which can be homopolymers or copolymers and are referred to herein as polybutylenes for convenience, are well known and can be shaped and/or formed into objects by a variety of conventional techniques such as extrusion or injection molding. For other purposes, it would be of advantage to provide objects with a coating of polybutylene to provide, for example, corrosion or abrasion resistance or a tie layer for bonding other polymers to a substrate to which the other polymers may not adhere well.

In one application, polished aluminum is coated with a thin uniform layer of polybutylene. The coating is applied such that in certain areas it can be removed to form a mask which is used to selectively chemically etch the aluminum as necessary for the manufacture of certain articles, e.g. aircraft wing surfaces.

In the past, on highly polished surfaces, polybutylene coatings would delaminate within 4 to 6 hours from coating.

A method was needed to coat polished aluminum so that the coating would not delaminate and so that etching could be completed. After etching, it is then desirable to be able to remove the polybutylene mask with a minimum amount of work.

We have found that by incorporating a nucleating agent into a polybutylene coating composition, coatings can be produced which do not delaminate for 24 to 96 hours. The coating has good adhesion even to polished aluminum and can be easily removed after 24-96 hours.

According to the invention there is provided a process for coating a substrate with a polymeric material comprising heating a powdered polymeric material comprising a blend of a butylene polymer with an adhesion promoter and a nucleating agent to substantially melt the polymeric material and spraying the substantially molten polymeric material onto the substrate to form a coating, said powdered polymeric material having a particle size from 20 to 100 mesh. Mesh sizes are based upon ASTM D1921 E11.

A use for this coating technique is to provide corrosion and abrasion protection for a substrate, for example to provide a mask for selectively etching a substrate. The polybutylene suitably is an isotactic polybutylene optionally blended with tackifying resins. Polybutylene DP2420 available from Shell Chemical Company, a division of Shell Oil Company, can be used.

To create coated articles, the polymeric material can be sprayed onto various substrates using a propane flame without the need for an additional solvent. Flame spraying can be accomplished by blowing the powdered polymeric material through a flame and depositing it on the desired substrate, for example stainless steel or aluminum panel or rod. It is contemplated that other substrates can be used to prepare coated articles. For example, it is possible that even polymer substrates, with melting point similar to or higher than the melting temperature of the coating polymer, could be used to prepare coated articles. During coating, the surface of the substrate to be sprayed can be heated above 93°C (200°F), preferably above 107°C (225°F), say about 150°C (300°F), while any surface of the substrate which is not sprayed can be kept at below 93°C (200°F).

The spraying is preferably performed at rates of 5.6 to 14 m² (60-150 square feet) per hour creating a 0.2 to 0.25 mm (8-10 mil) thick coating on the substrate. The coating can be modified by adding pigments or other stabilizers to the polymeric material before the coating procedure.

The polybutylene used in accordance with the invention can be a butene-1 homopolymer or a copolymer of butene-1 with such comonomers as ethylene, propylene, and alpha olefins having from 5 to 8 carbon atoms (see US-A-3362940).

Polybutylenes are composed of linear chain molecules with a regular and spatially ordered arrangement of ethyl side groups, the pendant groups that result when butene-1 is polymerized across the 1,2 carbon double bond, along an ethylene chain backbone (see US-A-3,362,940). When cooled from the melt, the ethyl side groups initially align in a tetragonal spatial arrangement, developing a little over one half of the ultimate crystallinity (form II). With time, the tetragonal crystalline phase transforms into a stable hexagonal spatial arrangement with subsequent development of additional crystallinity (form I). This is a very slow process, the transformation being completed in the neat polymer over a period of several days. This phase transformation produces some shrinkage of the polymer and results in stresses in a coating. In some cases where adhesion to the substrate is not strong the coating may delaminate.

By adding a nucleating agent, it has been found that the polybutylene coating does not shrink as quickly or as much. It is believed that the presence of the nucleating agent increases the nucleation density thereby decreasing the crystalline domain size and consequently the stresses produced during the phase transition.

Nucleating agents which may be used include any nucleating agent which will increase the crystallization temperature of the polybutylene. Examples include high density polyethylene, polyethylene, nylon, alizarin, 1,8 naphthalimide, phthalimide, 1,5-dihydroxy-9,10-anthraquinone and fillers or pigments such as zinc oxide, titanium oxide or talc.

The adhesion of polybutylene to various substrates can be improved by incorporation of functionality, such as a carboxylic acid functionality or derivative thereof, into the chain by copolymerization or by grafting. Alternatively a functional copolymer can be used as an adhesion promoter. Ethylene-methacrylic acid copolymers and ethylene-vinyl acetate copolymers are examples of such functional copolymers.

The process of the invention is usefully conducted employing the polybutylene composition without the addition of other materials. However, conventional additives such as antioxidants and stabilizers which are designed to improve the properties of the coating may be incorporated within the polybutylene composition. In a particular embodiment, however, the polybutylene is blended with a second polymeric component and the resulting blend is employed in the flame coating process.

The method of forming a blend to be used in the process of the invention is not material so long as a uniform blend of the components is produced without undue degradation of the components or the resulting blend. In one modification the polybutylene polymer and the additives are coextruded to produce the blend as an extrudate. In an alternative modification, the components are dry blended as powders or blended in a mixing device which exhibits high shear.

The blends used in the process of the invention may optionally contain other conventional additives such as antioxidants, stabilizers and fire retardant materials, and other additives designed to improve the processability of the polymers or improve the properties of the resulting blend. Such additives are added by conventional methods prior to, together with, or subsequent to the blending of the component polymers.

The general methods of spraying molten polymeric materials are known in the art. Preferably the polymeric material is applied by flame spraying. The basic concept of flame spraying of a thermoplastic polymeric material involves an apparatus wherein the polymeric material, a fuel and oxygen-containing gas are introduced into a combustion chamber wherein the fuel and oxygen-containing gas mixture ignites, thereby giving off heat which serves to substantially melt the polymeric material. The molten polymeric material is thereafter propelled from the combustion chamber by a source of propelling gas onto the surface of the object to be coated. A modification of the process, also often termed flame spraying, although not directly involving a flame, employs a heated wire or filament to melt the polymer to be sprayed. The use of the flame produced by combustion of a fuel in air is generally preferred.

Illustrative fuels are generally low-molecular weight hydrocarbons which ignite easily and are normally gaseous at ambient conditions. Examples of suitable fuels include propane, methane, butane, propylene, ethylene and acetylene. As the oxygen-containing gas employed to cause combustion of the fuel, various mixtures of oxygen and other non-combustible gases are usefully employed. Air is preferred. Various gaseous materials are useful as the propelling gas including nitrogen, argon and helium. Largely for convenience and economy, the use of air as the propelling gas as well as the combustion gas is preferred. Examples of such flame spraying processes and apparatus therefor are known in the art. A particularly useful process and equipment for use in the process is described in US-A-4,632,309. Other related processes are illustrated by US-A-4,604,306, US-A-3,723,165 and US-A-3,440,079.

In a representative embodiment of the process of the invention the polymeric material comprising the polybutylene blended with adhesion promoter and nucleating agent, provided in a finely divided powder form, is mixed with propane fuel and air and passed to a combustion chamber where the fuel and air are ignited, thereby providing the energy required to substantially melt the polymeric material. The molten polymeric material is propelled from the combustion chamber and from the apparatus through the use of compressed air as a propelling carrier gas and is allowed to impact upon an object which is to be coated. The target object, being relatively cool, will cause the molten polymer to solidify and thereby provide the coating.

The state of division of the powdered polymeric material as well as the viscosity of the polybutylene, is important in obtaining good coatings on the target object. The polymeric material to be flame sprayed should be of a size from 20 mesh (sieve opening 850 $\mu$m) to 100 mesh (sieve opening 150 $\mu$m), preferably from 50 mesh (sieve opening 350 $\mu$m) to 80 mesh (sieve opening 180 $\mu$m). The polymers to be flame sprayed are preferably ground to a small particle size using a cryogenic grinder. Isotactic polybutylene having a melt index from 1 to 1000 may be used in the process of the present invention. Preferably the polybutylene has a melt index of between 45 and 400 so that the coating will be useful and the spraying process itself will proceed smoothly. Melt indexes are determined in accordance with ASTM D1238 Condition E.

The substrate to be coated suitably is a solid object for which a tough, wear- and corrosion-resistant coating is desired and objects of metal, glass, ceramic, plastics or other material may be coated by the process. More frequently, the process is employed to provide a coating of polybutylene or blend thereof on metal objects. The process of the invention may be used to provide a coating in conjunction with other polymeric coatings wherein the object to be coated has a base coat of a first polymeric composition, such as another polyolefin, and a subsequent top coat of polybutylene or polybutylene blend. Alternatively, the coating comprising polybutylene may be used to provide a base coat suitable for subsequent top coating with a second composition.

The invention will now be further described by reference to the following Examples.

Examples

Isotactic polybutylene DP 2420 (from Shell Chemical Company, Houston, Texas, U.S.A.) having a melt flow of 20 was cryogenically ground to a particle size of about 70 mesh. The powder was dry blended with any additives and sprayed onto polished aluminum panels approximately 15x30x0.5 cm (6 inches by 12 inches by 3/16 inch thick). The plates were flame dried and heated to about 107°C (225°F) then coated by flame spraying until a uniform smooth coating was achieved. The results are summarized below.

The additives used (in Examples 2 to 4) were high density polyethylene (HDPE) and zinc oxide as nucleating agents and ethylene-methacrylic acid (EMAA) as adhesion promoter. The HDPE was "Alathon" F-7815 available from Oxy Petrochemicals. The zinc oxide was "Kadox" 911 with a mean particle size of 0.13 $\mu$m maximum, available from Zinc Corporation of America. The ethylene-methacrylic acid was "Nucrel" 535 available from E.I. du Pont de Nemours. The components for each of the compositions for the Examples were extruded on a 3.2 cm (1.25 inch) extruder equipped with a mixing screw at 100 to 120 RPM. The initial zone temperature was 100°C and all other zones were at 175°C.

The blends used in Examples 2, 3 and 4 were analyzed on a Perkin Elmer 7 series thermal analyses system. The crystallization temperatures for the blends are shown below:

| Example | Crystallization Temperature |
|---------|-----------------------------|
| 2 | 69.4°C |
| 3 | 74.1°C |
| 4 | 71.8°C |

Example 1 (Control)

PB2420 polybutylene with no adhesion promoter or nucleating agent was flame sprayed onto polished aluminum plates. The powder did not flow evenly during the flame spraying resulting in non-uniform coatings. The resulting coatings, immediately after coating, would peel off easily without tearing, indicating little or no adhesion and would spontaneously delaminate within 2-4 hours after coating.

Example 2 (Control)

A blend of PB2420 polybutylene with 10 wt% ethylene/methacrylic acid copolymer was flame sprayed onto polished metal plates. The powder flow was good and the adhesion was good, but the coating spontaneously delaminated after 2-4 hours.

Example 3

A blend of PB2420 polybutylene with 10 wt% ethylene-methacrylic acid copolymer as adhesion promoter, and 0.5 wt% HDPE and 0.5 wt% zinc oxide as nucleating agents was flame sprayed on polished aluminum as above. The blend had excellent flame spray characteristics with good powder flow behaviour. The resulting coatings had good adhesion and did not delaminate for 24 to 96 hours after coating.

Example 4

A blend of DP2420 polybutylene with 10 wt% ethylene-methacrylic acid copolymer as adhesion promoter and 1.0 wt% HDPE and 0.5 wt% zinc oxide as nucleating agents was flame sprayed as above. The blend had excellent flame spray characteristics with good flow behaviour. The resulting coatings had good adhesion and did not delaminate for 24 to 96 hours after coating.

**Claims**

1. A process for coating a substrate with a polymeric material comprising heating a powdered polymeric material comprising a blend of a butylene polymer with an adhesion promoter and a nucleating agent to substantially melt the polymeric material and spraying the substantially molten polymeric material onto the substrate to form a coating, said powdered polymeric material having a particle size from 20 to 100 mesh.

2. A process according to claim 1 wherein the butylene polymer is a butene-1/ethylene copolymer.

3. A process according to claim 2 wherein the copolymer contains between 5 and 25 mole percent ethylene.

4. A process according to claim 1, 2 or 3 wherein the butylene polymer has a melt index of between 45 and 400.

5. A process according to any one of the preceding claims wherein the adhesion promoter is an ethylene/methacrylic acid copolymer or ethylene-vinyl acetate copolymer.

6. A process according to any one of the preceding claims wherein the blend contains from 1 to 35 percent by weight of the adhesion promoter.

7. A process according to claim 6 wherein the blend contains from 5 to 15 percent by weight of the adhesion promoter.

8. A process according to any one of the preceding claims wherein the nucleating agent is high density polyethylene or zinc oxide.

9. A process according to any one of the preceding claims wherein the substrate is heated to above 93°C (200°F) before coating.

10. A process according to claim 9 wherein the substrate is heated to above 107°C (225°F) before coating.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 861 675 (E.R.GEORGE) <br> * column 2, line 15 - line 35 * <br> * column 3, line 48 - column 4, line 2; claims * <br> --- | 1,5 | B05D1/10 <br> C09D123/20 |
| P,X | US-A-5 073 414 (C.O. CASTRO) <br> * the whole document * <br> --- | 1-7,9-10 | |
| Y | FR-A-1 092 858 (UNION CARBIDE AND CARBON CORPORATION) 27 April 1955 <br> * page 1, right column, line 9 - line 28; claims * <br> --- | 1-3,5-10 | |
| Y | FR-A-925 182 (SCHORI METALLASING PROCESS) 27 August 1947 <br> * page 2, left column, line 10 - line 17; claims * <br> --- | 1,9-10 | |
| Y | FR-A-2 355 873 (SOCIETE CHIMIQUE DES CHARBONNAGES) <br> * page 1, line 8 - line 20; claims; examples; table II * <br> --- | 1-2,5-8 | |
| Y | EP-A-0 201 996 (MITSUI PETROCHEMICAL INDUSTRIES LTD. & SHELL OIL COMPANY) <br> * page 11, line 17 - line 24; claims; example 1 * <br> --- | 1-3 | TECHNICAL FIELDS SEARCHED (Int. Cl.5) <br><br> C09D <br> C08K <br> C08L <br> B05D |
| A | US-A-4 645 792 (SHELL OIL COMPANY) <br> * claims; examples * <br> --- | 8 | |
| A | US-A-2 643 955 (J.B. POWERS) 30 June 1953 <br> * claim 10 * <br> --- | 1 | |
| A | US-A-4 615 369 (S.C. SHARMA) <br> * claims; examples * <br> --- | 1 | |
| A | US-A-3 810 862 (R.D.MATHIS ET AL.) <br> * column 2, line 14 - line 24; claims * <br> ----- | 8 | |

The present search report has been drawn up for all claims

| Place of search | Date of completion of the search | Examiner |
|---|---|---|
| THE HAGUE | 14 APRIL 1992 | BROTHIER J-A.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)